(19) Europäisches Patentamt

European Patent Office

Office européen des brevets

(11) Numéro de publication: **0 214 045 B1**

(12) **FASCICULE DE BREVET EUROPEEN**

(45) Date de publication de fascicule du brevet: **06.10.93** (51) Int. Cl.⁵: **G02B 1/10**, G02B 5/26

(21) Numéro de dépôt: **86401836.1**

(22) Date de dépôt: **19.08.86**

(54) **Dispositif optique à filtrage spectral sélectif.**

(30) Priorité: **23.08.85 FR 8512689**

(43) Date de publication de la demande:
**11.03.87 Bulletin 87/11**

(45) Mention de la délivrance du brevet:
**06.10.93 Bulletin 93/40**

(84) Etats contractants désignés:
**DE GB IT**

(56) Documents cités:
**EP-A- 0 170 439**
**DE-A- 3 313 379**
**GB-A- 1 053 166**
**US-A- 2 403 685**

(73) Titulaire: **THOMSON-CSF**
**51, Esplanade du Général de Gaulle**
**F-92800 Puteaux(FR)**

(72) Inventeur: **Dufresne de Virel, François**
**THOMSON-CSF**
**SCPI**
**19 avenue de Messine**
**F-75008 Paris(FR)**

(74) Mandataire: **Lepercque, Jean et al**
**THOMSON-CSF**
**SCPI**
**F-92045 PARIS LA DEFENSE CEDEX 67 (FR)**

Rank Xerox (UK) Business Services
(3.10/3.6/3.3.1)

## Description

La présente invention concerne un dispositif optique à filtrage spectral sélectif.

Pour le fonctionnement de certains systèmes optiques, il est nécessaire d'effectuer des traitements optiques permettant de sélectionner des bandes spectrales parmi le spectre optique total traversant ces systèmes optiques. Le cas particulier que vise la présente invention est le besoin d'un traitement optique anti-reflet dans une bande spectrale et réfléchissant dans une bande spectrale adjacente à la première.

Une solution bien connue des fabricants de traitements optiques consiste à réaliser sur la surface optique d'un élément servant de filtre spectral, un traitement anti-reflet ne couvrant que la bande intéressante. Le traitement n'étant pas anti-reflet pour la deuxième bande spectrale, une bonne partie de l'énergie est réfléchie et le traitement réfléchissant recherché est ainsi réalisé. Cependant, les valeurs des coefficients de réflexion obtenus ne sont pas très élevées et sont souvent insuffisantes pour les performances recherchées. Par contre si l'on cherche à favoriser le traitement réfléchissant, c'est le traitement anti-reflet qui devient moins efficace.

Le document US-2 403 685 décrit un dispositif comportant une face anti-reflet et une face réfléchissante mais ce dispositif peut présenter des interférences soustractives des faisceaux réfléchis.

L'invention se fixe pour but de pallier les inconvénients des dispositifs de l'Art Connu.

Pour ce faire, l'invention propose un dispositif optique permettant d'obtenir simultanément un fort coefficient de réflexion dans une première bande spectrale et un coefficient très faible dans une deuxième bande spectrale adjacente.

L'invention a donc pour objet un dispositif optique à filtrage spectral sélectif présentant un coefficient de réflexion de forte valeur à des longueurs d'onde comprises dans une première bande spectrale (Bande I) et de faible valeur à des longueurs d'onde comprises dans une deuxième bande spectrale (Bande II) pour un faisceau de rayons incidents de direction de propagation parallèle à un axe de référence, comprenant un bloc comportant une première face plane traversée par le faisceau incident, et au moins une deuxième face plane comportant un traitement réfléchissant les longueurs d'onde de la première bande spectrale (Bande I), lesdites faces planes étant disposées dans l'espace par rapport audit axe de référence de manière à ce que les rayons de longueurs d'onde compris dans la première bande spectrale soient retransmis par le dispositif en un faisceau de direction de propagation parallèle à cet axe, caractérisé en ce que ladite première face plane comporte un traitement anti-reflet pour au moins les longueurs d'onde de la première bande spectrale, et en ce que ledit bloc est constitué d'un matériau absorbant sélectivement les longueurs d'onde de la deuxième bande spectrale.

L'invention a également pour objet un dispositif optique à filtrage spectral sélectif présentant un coefficient de réflexion de forte valeur à des longueurs d'onde comprises dans une première bande spectrale (Bande I) et de faible valeur à des longueurs d'onde comprises dans une deuxième bande spectrale (Bande II) pour un faisceau de rayons incidents de direction de propagation parallèle à un axe de référence, comprenant un prisme comportant une première face plane dont la normale forme avec ledit axe de référence un premier angle déterminé supérieur à une valeur préétablie et au moins une deuxième face plane, caractérisé en ce que ladite première face plane comporte un traitement anti-reflet pour au moins les longueurs d'onde de la première bande spectrale, en ce que ledit prisme est constitué d'un matériau transparent aux longueurs d'onde de la première bande spectrale, en ce que les rayons de longueur d'onde compris dans la première bande spectrale (Bande I) subissent une réfraction à l'entrée dans ledit prisme suivant une direction formant un deuxième angle déterminé avec ledit axe de référence ; et en ce que ladite deuxième face plane est munie d'un revêtement réfléchissant sélectivement les longueurs d'onde de la première bande spectrale.

L'invention sera mieux comprise et d'autres particularités et avantages apparaîtront à l'aide de la description qui suit et des figures annexées et parmi lesquelles :

- la figure 1 est un diagramme représentant les variations du coefficient de réflexion en fonction de la longueur d'onde d'un dispositif selon l'invention ;
- les figures 2 et 3 représentent schématiquement deux variantes d'exécution du dispositif de l'invention selon une première approche ;
- les figures 4 et 5 représentent schématiquement deux variantes d'exécution du dispositif de l'invention selon une seconde approche.

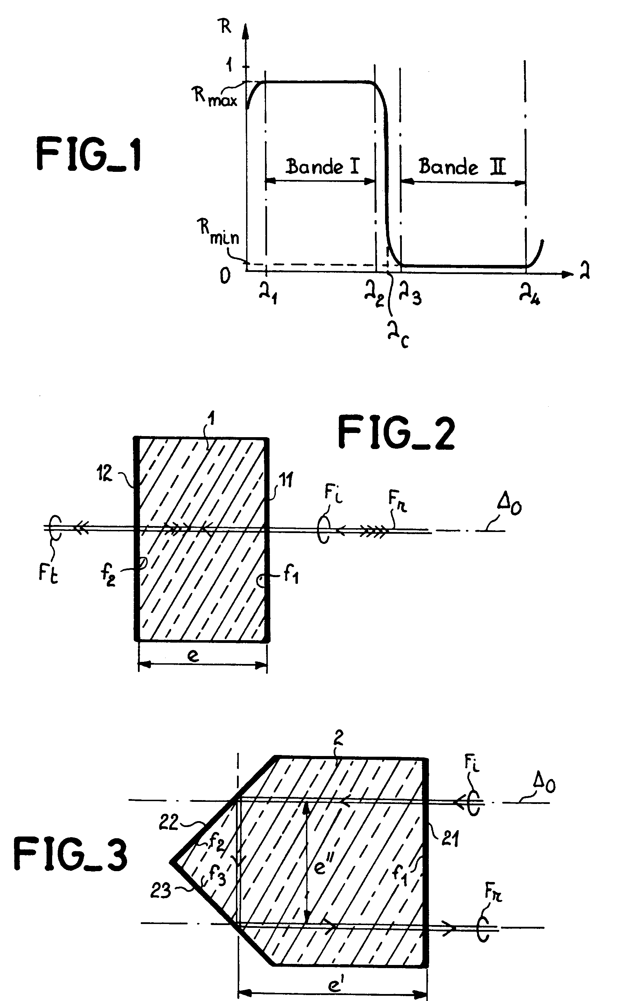

Pour fixer les idées, sans que cela soit limitatif, on a représenté sur la figure 1 un exemple de caractéristiques à obtenir.

Sur cette figure est représentée l'évolution du coefficient de réflexion R d'un dispositif optique à spectre de filtrage sélectif en fonction de la longueur d'onde $\lambda$.

2

Il est supposé dans l'exemple illustré sur la figure 1 que la bande spectrale I c'est-à-dire la bande comprise entre deux longueurs d'onde $\lambda_1$ et $\lambda_2$ doit être réfléchie avec un coefficient de réflexion maximum $R_{max}$ et que la bande spectrale II, entre deux longueurs d'onde $\lambda_3$ et $\lambda_4$, ne doit pas l'être ou du moins avec un coefficient de réflexion très faible : $R_{min}$. L'exemple décrit s'applique aussi bien au cas où $\lambda_1 < \lambda_2 < \lambda_3 < \lambda_4$ qu'au cas où $\lambda_3 < \lambda_4 < \lambda_1 < \lambda_2$.

L'invention s'applique également au cas où il y a plus que deux bandes spectrales, ou au cas où l'on recherche une transmission maximale et non plus une réflexion maximale.

Entre les deux bandes I et II, la courbe décrivant l'évolution du coefficient de réflexion présente un basculement brutal pour une longueur d'onde $\lambda_c$, ou longueur d'onde de coupure. Il faut donc que le coefficient de réflexion maximum $R_{max}$ soit le plus grande possible et que le coefficient de réflexion minimum $R_{min}$ le plus faible possible.

Comme il a été rappelé, dans l'Art Connu, pour obtenir une telle caractéristique, il est procédé à un traitement d'une surface optique, anti-reflet dans la bande I et réfléchissant dans la bande II.

Cependant, pour certaines applications, ce traitement peut s'avérer insuffisant et les valeurs de $R_{min}$ et/ou $R_{max}$, respectivement trop forte et/ou trop faible.

La figure 2 illustre une première variante de réalisation d'un dispositif optique à filtrage spectral sélectif selon une première approche de l'invention.

Celui-ci comprend une lame I à faces principales parallèles : $f_1$ et $f_2$, en un matériau optique présentant une certaine absorption dans la bande II, mais ayant une bonne transmission, avec une longueur d'onde de coupure $\lambda_c$ proche de celle recherchée. On choisira de préférence pour la lame 1, un matériau dont la longueur d'onde de coupure est comprise entre 0,35 micromètre et 15 micromètres. De tels matériaux existent tels le silicium ($\lambda_c \sim 1,3\mu m$), le germanium ($\lambda_c \sim 1,8\mu m$), le fluorure de magnésium ($\lambda_c \sim 6,5\mu m$), le saphir ($\lambda_c \sim 5,5\mu m$), le fluorure de calcium ($\lambda_c \sim 8\mu m$). Le sulfure de zinc ($\lambda_c \sim 0,5\mu m$ et $\lambda_c \sim 11\mu m$), le séléniure de zinc ($\lambda_c \sim 0,5\mu m$), l'arséniure de gallium ($\lambda_c = 1\mu m$), le tellure de cadmium ($\lambda_c = 0,9\mu m$), la silice ou le quartz cristallin ($\lambda_c \sim 4\mu m$), le spinel ($\lambda_c \sim 0,6$ et $6\mu m$), les verres chalcogénures ($\lambda_c \simeq 1 \mu m$) ou des verres absorbants disponibles dans le commerce. La longueur d'onde de coupure peut être positionnée dans une certaine mesure par l'épaisseur e plus ou moins grande de matériau absorbant utilisé. La surface de la face d'entrée $f_1$ a subi un traitement anti-reflet couvrant les bandes spectrales I et II (figure 1). Ce traitement est obtenu par dépôt 11 d'une ou plusieurs couches. Les techniques classiques de l'Art Connu pour le traitement anti-reflet d'une surface peuvent être mises en oeuvre.

La surface de la face opposée $f_2$ a également été traitée, de façon à être très réfléchissante pour la bande spectrale I et peu réfléchissante pour la bande spectrale II. Cette caractéristique est obtenue par dépôt d'une ou plusieurs couches 12 de matériaux.

Les techniques habituellement utilisées dans l'Art Connu peuvent être mises en oeuvre à cette fin.

Comme illustré par la figure 2, un rayon d'un faisceau incident Fi, suivant une direction parallèle à un axe $\Delta_0$ normal à la face d'entrée $f_1$, va voir la quasi intégralité des longueurs d'onde des bandes I et II transmises sans perte notable ni réflexion parasite par la couche 11 formant le traitement anti-réfléchissant. Cet axe $\Delta_0$ est l'axe optique de référence d'un système comportant le dispositif de l'invention.

Ce rayon va effectuer un aller et retour dans la lame d'épaisseur e, du moins en ce qui concerne les longueurs d'onde de la bande I, du fait de la présence de la couche réfléchissante 12.

Cette dernière couche 12 va transmettre la majeure partie de l'énergie lumineuse associée aux longueurs d'onde de la bande II, faisceau Ft, et réfléchir avec un bon rendement les longueurs d'onde de la bande I.

En outre, le matériau de la lame 1 présentant une absorption sélective dans la bande II va transmettre les longueurs d'onde de la bande I sans atténuation notable et, au contraire, absorber les longueurs d'onde de la bande II.

La fraction de ces dernières non transmise par la couche 12, subit donc une atténuation sur une épaisseur de matériau égale au double de l'épaisseur de la lame, soit 2e.

Finalement le faisceau émergeant Fr ne comporte plus, de façon notable, que les longueurs d'onde de la bande I.

Le dispositif de l'invention, illustré par la figure 2 se comporte donc comme un miroir sélectif en longueurs d'onde avec des caractéristiques améliorées par rapport à l'Art Connu.

Si les caractéristiques ne sont pas encore satisfaisantes, on peut envisager un dispositif tel celui représenté sur la figure 3, dispositif dans lequel la lame à faces parallèles de la figure 2 a été remplacée par un prisme 2 permettant d'augmenter la distance parcourue dans le matériau et le nombre de réflexions. La surface d'entrée $f_1$ a un traitement anti-reflet 21 pour les deux bandes spectrales et les surfaces inclinées $f_2$ et $f_3$ un traitement réfléchissant 22 et 23, pour la bande I, naturellement adapté à l'incidence des rayons y parvenant.

Dans l'exemple illustré, le prisme a donc deux faces réfléchissantes $f_2$ et $f_3$, inclinées à 45°. Ceci a pour effet d'augmenter le parcours suivi par les rayons. Après pénétration dans le prisme 2, le faisceau incident Fi effectue un parcours égal à (2 e' + e"), avant de ressortir en un faisceau "réfléchi" Fr ne véhiculant, de façon significative, que des longueurs d'onde de la bande I comme dans la variante décrite en relation avec la figure 2.

Les distances e' et e" représentent, respectivement, la longueur du parcours entre la face d'entrée et les faces réfléchissantes, $f_2$ ou $f_3$, et la longueur de parcours entre les points de réflexions sur les deux faces $f_2$ et $f_3$.

En outre, dans l'exemple illustré, avec deux faces réfléchissantes, la lumière réfléchie est proportionnelle au carré du coefficient de réflexion. Les longueurs d'onde de la bande II sont donc très fortement atténuées également pour cette raison.

Naturellement le prisme 2 peut prendre d'autres formes, notamment pour augmenter le nombre de faces réfléchissantes et augmenter le parcours à l'intérieur du matériau absorbant.

Dans certaines applications, c'est-à-dire pour certaines gammes de longueurs d'onde, il n'est pas possible d'obtenir un traitement anti-reflet couvrant les deux bandes spectrales.

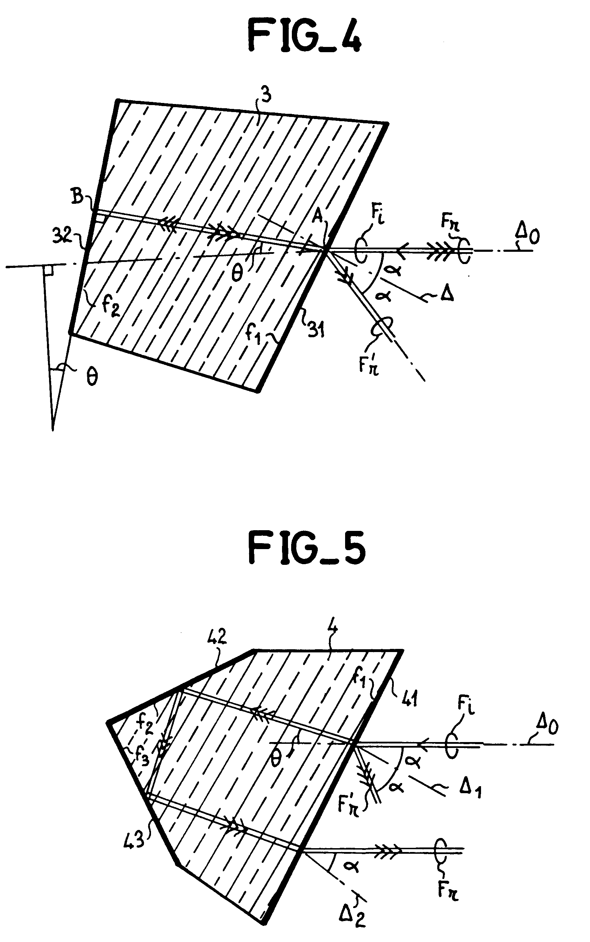

Selon une seconde approche de l'invention, on incline alors la face d'entrée de telle sorte que les rayons réfléchis par cette surface présentent une inclinaison suffisante par rapport à l'axe optique du système optique comportant le dispositif de l'invention pour sortir du cône d'acceptance de ce système optique, le traitement de cette face étant essentiellement anti-reflet pour la bande I sans que cela ne soit absolument nécessaire notamment dans le cas d'un matériau à indice très faible. La face opposée réfléchissante doit être inclinée pour tenir compte de la déviation introduite par le basculement de la face d'entrée de telle sorte que la face opposée soit en autocollimation par rapport à la lumière incidente, pour la bande spectrale I (ou pour une longueur d'onde particulière comprise entre $\lambda_1$ et $\lambda_2$). La face réfléchissante présente un traitement réfléchissant de même type que ceux décrits précédemment, mais adapté à l'incidence des rayons optiques y parvenant. Dans un tel dispositif, le milieu peut ne pas être absorbant. Un exemple d'un tel dispositif est représenté sur la figure 4.

Le faisceau incident Fi est confondu avec l'axe optique de référence $\Delta_0$ du dispositif. La face d'entrée voit sa normale, axe $\Delta$, inclinée d'un angle $\alpha$ par rapport à l'axe optique $\Delta_0$.

Comme le traitement anti-reflet 31 de la face d'entrée $f_1$ n'est efficace que pour la bande I, il y a réflexion non négligeable des longueurs d'onde de la bande II : faisceau réfléchi parasite F'r. Les rayons de ce faisceau forment un angle $2\alpha$ avec ceux du faisceau incident Fi.

La majeure partie des longueurs d'onde de la bande I est réfractée à l'entrée dans le matériau de la lame 3 à faces non parallèles formant le dispositif selon cette seconde approche de l'invention. La face opposée $f_2$ est munie d'un traitement 32 réfléchissant dans la bande I comme précédemment. La face $f_2$ est inclinée d'un angle $\theta$ par rapport à la normale à l'axe optique $\Delta_0$ égal à l'angle de réfraction.

De cette manière les rayons frappent la face $f_2$ selon une direction normale à cette face et sont réfléchis selon cette direction. Le parcours dans le matériau est égal à deux fois la distance AB, A étant le point d'entrée dans la lame 3 et B le point de réflexion sur la face $f_2$. Le faisceau, après nouvelle réfraction du passage de la face $f_1$ ressort sous la forme d'un faisceau Fr confondu avec le faisceau incident Fi. Le faisceau réfléchi Fr constitue le seul faisceau utile contrairement au faisceau F'r qui est éliminé, puisqu'entièrement situé en dehors de l'angle d'acceptance. Le dispositif se comporte donc comme un miroir sélectif des longueurs d'onde de la bande I.

Si la longueur d'interaction AB est insuffisante compte-tenu que l'on ne désire pas augmenter dans de trop grandes portions les dimensions du dispositif, on peut adopter les mêmes dispositions qu'en ce qui concerne la première approche, à savoir les dispositions décrites en relation avec la figure 3.

On remplace la lame 3 par un prisme à faces de réflexions multiples

On augmente alors simultanément la longueur des parcours et le nombre de réflexions.

Un exemple d'un tel dispositif est représenté sur la figure 5. Le prisme 4 présente une face d'entrée $f_1$ revêtue d'un traitement 41 antiréfléchissant pour la bande I dont la normale $\Delta_1$ est inclinée d'un angle $\alpha$ par rapport à l'axe optique de référence $\Delta_0$ du dispositif. Comme en ce qui concerne le dispositif décrit en relation avec la figure 4, un faisceau incident Fi, de direction de propagation confondue avec l'axe optique $\Delta_0$, voit les longueurs d'onde de la bande II en partie réfléchies : faisceau F'r ; et subit une réfraction au passage de la face $f_1$.

Dans l'exemple illustré, le prisme 4 comporte deux faces $f_2$ et $f_3$, réfléchissantes : revêtements 42 et 43. Les orientations respectives des faces $f_1$ à $f_3$ sont telles que le faisceau ressort du prisme 4 sous la forme d'un faisceau utile Fr faisant avec la normale $\Delta_2$ à la face $f_1$ un angle égal à l'angle $\alpha$, pour se propager parallèlement à l'axe $\Delta_0$.

Là encore le dispositif se comporte comme un miroir sélectif pour les longueurs d'onde de la bande I.

Pour fixer les idées, on va maintenant décrire un exemple de réalisation concret d'un dispositif optique à filtrage spectral sélectif selon l'invention.

Dans l'application spécifique décrite le dispositif est un système réfléchissant des longueurs d'onde comprises entre 3 et 7 $\mu$m (bande I) et non réfléchissant entre 8 et 12 $\mu$m (bande II). Le coefficient de réflexion $R_{min}$ dans la bande II devait être inférieur à 1%.

Par les techniques de l'Art Connu, c'est-à-dire par l'utilisation seulement de couches respectivement anti-reflet et réfléchissantes, des valeurs typiques pouvant être atteintes étaient :

$R_{max} = R_{Bande\ I} \simeq 0,75$

$R_{min} = R_{Bande\ II} \simeq 0,10$

valeurs qui ne peuvent convenir.

On a choisi comme matériau absorbant du fluorure de calcium (Ca $F_2$) qui présente une absorption importante pour les longueurs d'onde supérieures à 9 $\mu$m et une bonne transmission dans la bande 3-7 $\mu$m.

Si l'on se réfère à la publication intitulée :

"Infrared Handbook" par W.L. WOLFE et G.J. ZISSIS,

Environment Research Institute of MICHIGAN, 1978, pages 7-40, les valeurs du coefficient de transmission intrinsèque, $T_{10}$, en fonction de la longueur d'onde du fluorure de calcium pour une épaisseur de 10 mm sont les suivantes :

| $T_{10}$ | 95% | 95% | 84% | 53% | 16% | 0% |
|---|---|---|---|---|---|---|
| $\lambda$ ($\mu$m) | 3 | 5 | 7 | 8 | 9 | 10 |

Ces chiffres ne tiennent pas compte des pertes par réflexion de Fresnel (de l'ordre de 3% par face).

Dans le cadre de cette application, le fluorure de calcium ayant un indice de réfraction très bas : 1,40, le traitement anti-reflet couvrant les deux bandes spectrales, c'est-à-dire la gamme 3-12 $\mu$m, n'est pas possible. Aussi, on a recours à la deuxième approche de l'Invention. Dans le cas présent, on a choisi la variante de réalisation représentée sur la figure 4. La longueur minimale à choisir $e_{min}$ du parcours dans le matériau obéit à la relation suivante :

$$[(T_{10}(8\ \mu m)]^{e_{min}} = \frac{R_{recherché}}{R_{traitement\ optique}}$$

avec $e_{min}$ en centimètres.

Dans cette relation, "R recherché" est égal ou inférieur à 0,01 et "R traitement optique" est le coefficient pouvant être obtenu par l'Art connu, typiquement 0,1 ;

$$soit\ (0,53)^{e_{min}} = 0,10$$

$$et \qquad e \simeq 36,3\ mm$$

On a choisi $e_{min}$ = 40 mm, soit une épaisseur de la lame égale à 20 mm du fait de l'aller et retour des rayons. Cette épaisseur est égale à la longueur AB telle qu'elle a été définie lors de la description de la figure 4, puisque la lame n'est pas à faces parallèles.

Pour une épaisseur de fluorure de calcium égale à 40 mm, les coefficients de réflexion R suivant la direction Fr sont les suivants :

5

| R | 0,61 | 0,61 | 0,37 |
|---|---|---|---|
| $\lambda$ (μm) | 3 | 5 | 7 |

Pour des longueurs d'ondes comprises entre 8 et 12 μm ces coefficients de réflexion sont inférieurs à 0,01.

Le système optique placé devant le dispositif de l'invention couvrait un champ de ± 5° par rapport à l'axe optique $\Delta_0$.

Pour éviter d'intercepter le faisceau parasite F'r, il faut choisir l'angle α supérieur à cette valeur. Dans l'exemple illustré, on a choisi α = 6°.

Dans ces conditions l'angle θ qui est égal à l'angle de réfraction obéissant à la relation :

$$\sin^{-1}\left(\frac{\sin 6°}{1,4}\right)$$

est égal à : 4,3°

Mais il est à noter que l'invention prévoit des longueurs d'onde des bandes I et II situées aussi bien dans le domaine des longueurs d'onde infra-rouge que dans le domaine des longueurs d'onde visible, c'est-à-dire situées entre sensiblement 0,35 micromètres et 15 micromètres.

**Revendications**

1. Dispositif optique à filtrage spectral sélectif présentant un coefficient de réflexion de forte valeur à des longueurs d'onde comprises dans une première bande spectrale (I) et de faible valeur à des longueurs d'onde comprises dans une deuxième bande spectrale (II) pour un faisceau de rayons incidents (Fi) de direction de propagation parallèle à un axe de référence ($\Delta_0$), comprenant un bloc (1-2) comportant une première face plane ($f_1$) traversée par le faisceau incident (Fi), et au moins une deuxième face plane ($f_2$, $f_3$) comportant un traitement (12 ; 22, 23) réfléchissant les longueurs d'onde de la première bande spectrale (I), lesdites faces planes ($f_1$, $f_2$, $f_3$) étant disposées dans l'espace par rapport audit axe de référence ($\Delta_0$) de manière à ce que les rayons de longueurs d'onde compris dans la première bande spectrale soient retransmis par le dispositif en un faisceau (Fr) de direction de propagation parallèle à cet axe ($\Delta_0$), caractérisé en ce que ladite première face plane ($f_1$) comporte un traitement anti-reflet (11 ; 21) pour au moins les longueurs d'onde de la première bande spectrale, et en ce que ledit bloc est constitué d'un matériau absorbant sélectivement les longueurs d'onde de la deuxième bande spectrale.

2. Dispositif selon la revendication 1, caractérisé en ce que ledit bloc a la forme d'une lame (1) à faces principales planes et parallèles ($f_1$, $f_2$), orthogonales audit axe de référence ($\Delta_0$), et en ce que la première desdites faces planes ($f_1$) comporte un traitement anti-reflet pour les longueurs d'onde des première et deuxième bandes spectrales (I, II) et est traversée par le faisceau incident (Fi) sous une incidence normale.

3. Dispositif selon la revendication 1, caractérisé en ce que ledit bloc est un prisme (2) comportant une première face plane ($f_1$), orthogonale audit axe de référence ($\Delta_0$), munie d'un traitement anti-reflet (21) pour les longueur d'onde des première et deuxième bandes spectrales (I, II) et traversée par le faisceau incident (Fi) et le faisceau retransmis (Fr) sous incidence normale ; et des deuxième et troisième faces planes ($f_2$, $f_3$) munies chacune d'un revêtement réfléchissant sélectivement les longueurs d'onde de la première bande spectrale (I) et inclinées à 45° par rapport audit axe de référence ($\Delta_0$), lesdites deuxième et troisième faces planes formant un angle de 90°.

4. Dispositif optique à filtrage spectral sélectif présentant un coefficient de réflexion de forte valeur à des longueurs d'onde comprises dans une première bande spectrale (I) et de faible valeur à des longueurs d'onde comprises dans une deuxième bande spectrale (II) pour un faisceau de rayons incidents (Fi) de direction de propagation parallèle à un axe de référence ($\Delta_0$), comprenant un prisme (3 ; 4) comportant une première face plane ($f_1$) dont la normale ($\Delta$ ; $\Delta_1$) forme avec ledit axe de référence ($\Delta_0$) un premier angle déterminé (α) supérieur à une valeur préétablie et au moins une deuxième face plane ($f_2$ ; $f_2$, $f_3$) caractérisé en ce que ladite première face plane comporte un traitement anti-reflet (31 ; 41)

6

pour au moins les longueurs d'onde de la première bande spectrale, en ce que ledit prisme est constitué d'un matériau transparent aux longueurs d'onde de la première bande spectrale, en ce que les rayons de longueur d'onde compris dans la première bande spectrale (I) subissent une réfraction à l'entrée dans ledit prisme suivant une direction formant un deuxième angle déterminé ($\theta$) avec ledit axe de référence ($\Delta_0$) ; et en ce que ladite deuxième face plane ($f_2$) est munie d'un revêtement (32) réfléchissant sélectivement les longueurs d'onde de la première bande spectrale.

5. Dispositif selon la revendication 4, caractérisé en ce que ledit prisme (3) comporte une seule deuxième face plane ($f_2$), cette face plane étant inclinée par rapport à la normale audit axe de référence d'un angle égal audit deuxième angle déterminé ($\theta$).

6. Dispositif selon la revendication 4, caractérisé en ce que ledit prisme (4) comporte des deuxième et troisième faces planes ($f_2$, $f_3$) munies chacune d'un revêtement (42, 43) réfléchissant sélectivement les longueurs d'onde de la première bande spectrale (I) et inclinées par rapport à la direction de propagation au sein du prisme (3) d'un angle égal à 45° lesdites deuxième et troisième faces planes formant un angle de 90°.

7. Dispositif selon l'une quelconque des revendications 1 à 6, caractérisé en ce que les longueurs d'onde desdites première (I) et deuxième (II) bandes spectrales sont comprises dans le domaine des longueurs d'onde de l'infrarouge.

8. Dispositif selon l'une quelconque des revendications 1 à 6, caractérisé en ce que les longueurs d'onde desdites première (I) et deuxième (II) bandes spectrales sont comprises dans le domaine des longueurs d'onde visible.

9. Dispositif selon l'une quelconque des revendications 1 à 8, caractérisé en ce que lesdites bandes spectrales (I, II) sont comprises entre 0,35 micromètre et 15 micromètres.

10. Dispositif selon la revendication 4, caractérisé en ce que le prisme (3) est en matériau absorbant sélectivement les longueurs d'onde de la deuxième bande spectrale (II).

11. Dispositif selon l'une quelconque des revendications 1 à 3 et 10, caractérisé en ce que ledit matériau absorbant a sa longueur d'onde de coupure ($\lambda_c$) comprise entre 0,35 micromètre et 15 micromètres.

12. Dispositif selon la revendication 11, caractérisé en ce que le matériau absorbant est choisi parmi les matériaux suivants : silicium, germanium, fluorure de magnésium, saphir, fluorure de calcium, sulfure de zinc, séléniure de zinc, arséniure de gallium, tellure de cadmium, silice, quartz cristallin, spinel ou verte chalcogénure.

**Claims**

1. Optical device with selective spectral filtering exhibiting a high reflection coefficient at wavelengths included within a first spectral band (I) and a low reflection coefficient at wavelengths included within a second spectral band (II) for a beam of incident rays (Fi) of direction of propagation parallel to a reference axis ($\Delta_0$), comprising a block (1-2) including a first plane face ($f_1$) traversed by the incident beam (Fi), and at least one second plane face ($f_2$, $f_3$) including a coating (12; 22, 23) reflecting the wavelengths of the first spectral band (I), said plane faces ($f_1$, $f_2$, $f_3$) being disposed in space in relation to said reference axis ($\Delta_0$) in such a manner that the rays of wavelengths included within the first spectral band are retransmitted by the device in a beam (Fr) of direction of propagation parallel to this axis ($\Delta_0$), characterised in that said first plane face ($f_1$) includes an antireflection coating (11; 21) for at least the wavelengths of the first spectral band, and in that said block is composed of a material selectively absorbing the wavelengths of the second spectral band.

2. Device according to Claim 1, characterised in that said block has the shape of a plate (1) with plane and parallel principal faces ($f_1$, $f_2$) orthogonal to said reference axis ($\Delta_0$), and in that the first one of said plane faces ($f_1$) includes an antireflection coating for the wavelengths of the first and second spectral bands (I, II) and is traversed by the incident beam (Fi) at a normal incidence.

3. Device according to Claim 1, characterised in that said block is a prism (2) including a first plane face ($f_1$), orthogonal to said reference axis ($\Delta_0$), and equipped with an antireflection coating (21) for the wavelengths of the first and second spectral bands (I, II) and traversed by the incident beam (Fi) and the retransmitted beam (Fr) at normal incidence; and second and third plane faces ($f_2$, $f_3$) each equipped with a coating selectively reflecting the wavelengths of the first spectral band (I) and inclined at 45° in relation to said reference axis ($\Delta_0$), said second and third plane faces forming an angle of 90°.

4. Optical device with selective spectral filtering exhibiting a high reflection coefficient at wavelengths included within a first spectral band (I) and a low reflection coefficient at wavelengths included within a second spectral band (II) for a beam of incident rays (Fi) of direction of propagation parallel to a reference axis ($\Delta_0$), comprising a prism (3; 4) including a first plane face ($f_1$) the normal ($\Delta$; $\Delta 1$) to which forms with said reference axis ($\Delta_0$) a first determined angle ($\alpha$) greater than a predetermined value and at least one second plane face ($f_2$; $f_2$, $f_3$), characterised in that said first plane face includes an antireflection coating (31; 41) for at least the wavelengths of the first spectral band, in that said prism is composed of a material which is transparent at the wavelengths of the first spectral band, in that the rays of wavelength included within the first spectral band (I) undergo a refraction at the entrance into said prism along a direction forming a second determined angle ($\theta$) with said reference axis ($\Delta_0$); and in that said second plane face ($f_2$) is equipped with a coating (32) selectively reflecting the wavelengths of the first spectral band.

5. Device according to Claim 4, characterised in that said prism (3) includes a single second plane face ($f_2$), this plane face being inclined in relation to the normal to said reference axis by an angle equal to said second determined angle ($\theta$).

6. Device according to Claim 4, characterised in that said prism (4) includes second and third plane faces ($f_2$, $f_3$) each equipped with a coating (42, 43) selectively reflecting the wavelengths of the first spectral band (I), said second and third plane faces being inclined in relation to the direction of propagation within the prism (3) by an angle equal to 45°, said second and third plane faces forming an angle of 90°.

7. Device according to any one of Claims 1 to 6, characterised in that the wavelengths of said first (I) and second (II) spectral bands are included within the range of infrared wavelengths.

8. Device according to any one of Claims 1 to 6, characterised in that the wavelengths of said first (I) and second (II) spectral bands are included within the range of visible wavelengths.

9. Device according to any one of Claims 1 to 8, characterised in that said spectral bands (I, II) are included between 0.35 micrometer and 15 micrometers.

10. Device according to Claim 4, characterised in that the prism (3) is of material selectively absorbing the wavelengths of the second spectral band (II).

11. Device according to any one of Claims 1 to 3 and 10, characterised in that said absorbing material has its cutoff wavelength ($\lambda_c$) included between 0.35 micrometer and 15 micrometers.

12. Device according to Claim 11, characterised in that the absorbing material is selected from among the following materials: silicon, germanium, magnesium fluoride, sapphire, calcium fluoride, zinc sulphide, zinc selenide, gallium arsenide, cadmium telluride, silica, crystalline quartz, spinel or chalcongenide glass.

**Patentansprüche**

1. Optische Vorrichtung mit selektiver Spektralfilterung, die für ein einfallendes Strahlenbündel (Fi), dessen Ausbreitungsrichtung parallel zu einer Referenzachse ($\Delta_0$) ist, für die in einem ersten Spektralband (I) enthaltenen Wellenlängen einen hohen und für die in einem zweiten Spektralband (II) enthaltenen Wellenlängen einen niedrigen Reflexionswert aufweist, mit einem Block (1-2), der eine erste ebene Seite ($f_1$) aufweist, die von dem einfallenden Bündel (Fi) durchquert wird, und wenigstens eine zweite ebene Seite ($f_2$, $f_3$), die eine Behandlung (12; 22, 23) aufweist, die die Wellenlängen des ersten Spektralbandes (I) reflektiert, wobei die ebenen Seiten ($f_1$, $f_2$, $f_3$) bezüglich der Referenzachse ($\Delta_0$) in der Weise im Raum angeordnet sind, daß die Strahlen mit der im ersten Spektralband enthaltenen Wellenlänge von der Vorrichtung in einem Bündel (Fr) übertragen werden, dessen Ausbreitungsrichtung parallel zur Achse ($\Delta_0$) ist, dadurch gekennzeichnet, daß die erste ebene Seite ($f_1$) eine Entspiegelung (11; 21) für wenigstens die Wellenlängen des ersten Spektralbandes aufweist, und daß der Block aus einem Material gebildet ist, das selektiv die Wellenlängen des zweiten Spektralbandes absorbiert.

2. Vorrichtung nach Anspruch 1, dadurch gekennzeichnet, daß der Block die Form einer Platte (1) aufweist, deren ebene und parallele Hauptflächen ($f_1$, $f_2$) orthogonal zur Referenzachse ($\Delta_0$) angeordnet sind, und daß die erste der ebenen Seiten ($f_1$) eine Entspiegelung für die Wellenlängen des ersten und zweiten Spektralbandes (I, II) aufweist und von dem einfallenden Strahl (Fi) im rechten Winkel durchquert wird.

3. Vorrichtung nach Anspruch 1, dadurch gekennzeichnet, daß der Block ein Prisma (2) ist, das eine erste, orthogonal zur Referenzachse ($\Delta_0$) angeordnete ebene Seite ($f_1$) enthält, die mit einer Entspiegelung (21) für die Wellenlängen des ersten und zweiten Spektralbandes (I, II) versehen ist und von dem einfallenden Bündel (Fi) und dem übertragenen Bündel (Fr) in einem rechten Winkel durchquert wird; und eine zweite ebene und eine dritte ebene Seite ($f_2$, $f_3$), die bezüglich der Referenzachse ($\Delta_0$) um 45° geneigt und jeweils mit einer Beschichtung versehen sind, die selektiv die Wellenlängen des ersten Spektralbandes (I) reflektiert, wobei die zweite ebene und die dritte ebene Seite einen Winkel von 90° bilden.

4. Optische Vorrichtung mit selektiver Spektralfilterung, die für ein einfallendes Strahlenbündel (Fi), dessen Ausbreitungsrichtung parallel zu einer Referenzachse ($\Delta_0$) ist, für die in einem ersten Spektralband (I) enthaltenen Wellenlängen einen hohen und für die in einem zweiten Spektralband (II) enthaltenen Wellenlängen einen niedrigen Reflexionswert aufweist, mit einem Prisma (3; 4), das eine erste ebene Seite ($f_1$) aufweist, deren Normale ($\Delta$; $\Delta1$) mit der Referenzachse einen ersten bestimmten Winkel ($\alpha$) bildet, der größer als ein vorbestimmter Wert ist, und wenigstens eine zweite ebene Seite ($f_2$; $f_2$, $f_3$), dadurch gekennzeichnet, daß die erste ebene Seite eine Entspiegelung (31; 41) für wenigstens die in dem ersten Spektralband enthaltenen Wellenlängen aufweist, daß das Prisma aus einem für die Wellenlängen des ersten Spektralbandes durchlässigen Material gebildet ist, daß die Strahlen mit der in dem ersten Spektralband (I) enthaltenen Wellenlänge bei ihrem Eintritt in das Prisma einer Brechung in eine Richtung unterworfen werden, die mit der Referenzachse ($\Delta_0$) einen zweiten bestimmten Winkel ($\theta$) bildet, und daß die zweite ebene Seite ($f_2$) mit einer Beschichtung (32) versehen ist, die selektiv die Wellenlängen des ersten Spektralbandes reflektiert.

5. Vorrichtung nach Anspruch 4, dadurch gekennzeichnet, daß das Prisma (3) eine einzige zweite, ebene Seite ($f_2$) aufweist, wobei diese ebene Seite bezüglich der Normalen der Referenzachse um einen Winkel geneigt ist, der gleich dem zweiten bestimmten Winkel ($\theta$) ist.

6. Vorrichtung nach Anspruch 4, dadurch gekennzeichnet, daß das Prisma (4) eine zweite ebene und eine dritte ebene Seite ($f_2$, $f_3$) aufweist, die bezüglich der Ausbreitungsrichtung im Inneren des Prismas (3) um einen Winkel von 45° geneigt und jeweils mit einer Beschichtung (42, 43) versehen sind, die selektiv die Wellenlängen des ersten Spektralbandes (I) reflektiert, wobei die zweite ebene und die dritte ebene Seite einen Winkel von 90° bilden.

7. Vorrichtung nach einem der Ansprüche 1 bis 6, dadurch gekennzeichnet, daß die Wellenlängen des ersten (I) und des zweiten (II) Spektralbandes im Bereich der Infrarotwellenlängen liegen.

8. Vorrichtung nach einem der Ansprüche 1 bis 6, dadurch gekennzeichnet, daß die Wellenlängen des ersten (I) und des zweiten (II) Spektralbandes im Bereich der sichtbaren Wellenlängen liegen.

9. Vorrichtung nach einem der Ansprüche 1 bis 8, dadurch gekennzeichnet, daß die Spektralbänder (I, II) zwischen 0,35 Mikrometern und 15 Mikrometern liegen.

**10.** Vorrichtung nach Anspruch 4, dadurch gekennzeichnet, daß das Prisma (3) aus einem Material besteht, das selektiv die Wellenlängen des zweiten Spektralbandes (II) absorbiert.

**11.** Vorrichtung nach einem der Ansprüche 1 bis 3 oder nach Anspruch 10, dadurch gekennzeichnet, daß die Durchlaßwellenlänge ($\lambda_c$) des absorbierenden Materials zwischen 0,35 Mikrometern und 15 Mikrometern liegt.

**12.** Vorrichtung nach Anspruch 11, dadurch gekennzeichnet, daß das absorbierende Material aus den folgenden Materialien gewählt ist: Silicium, Germanium, Magnesiumfluorid, Saphir, Calciumfluorid, Zinksulfid, Zinkselenid, Galliumarsenid, Cadmiumtellurid, Siliciumoxid, Kristallquarz, Spinell oder Chalcogenglas.

FIG_1

FIG_2

FIG_3

# FIG_4

# FIG_5